# EUROPÄISCHE PATENTANMELDUNG

(11) **EP 1 657 221 A1**
(43) Veröffentlichungstag der Anmeldung: **17.05.2006**
(21) Anmeldenummer: 04026118.2
(22) Anmeldetag: 04.11.2004
(51) Int. Cl.: C02F 1/68

(54) **Vorrichtung und Verfahren zur Aufbereitung von Badewasser**

(71) Anmelder: Unbescheiden GmbH, 76532 Baden-Baden (DE)
(72) Erfinder: Meissner, Markus, 76571 Gaggenau (DE)
(74) Vertreter: Reule, Hanspeter

(57) **Zusammenfassung**

Die Erfindung betrifft eine Vorrichtung zur Aufbereitung, vorzugsweise zur Desinfektion, des Badewassers (12) einer für jede Anwendung mit frischem Badewasser neu zu befüllenden Badeeinrichtung (10). Erfindungsgemäß ist eine Dosiereinrichtung für die Einleitung einer vorgegebenen Dosis eines vorzugsweise desinfizierenden Wasseraufbereitungsmittels in das frische Badewasser (12) vorgesehen.

## Beschreibung

Die Erfindung betrifft eine Vorrichtung zur Aufbereitung, vorzugsweise zur Desinfektion, des Badewassers einer für jede Anwendung mit frischem Badewasser neu zu befüllenden Badeeinrichtung sowie ein Verfahren zur Aufbereitung des Badewassers gemäß Oberbegriff des Anspruchs 7.

Badeeinrichtungen, die für jede Anwendung, d. h. für jeden Badegast bzw. für jede Gruppe von Badegästen, neu befüllt werden, finden einen breiten Anwendungsbereich in Kliniken, Hotels oder ähnlichen Einrichtungen mit ständig wechselnden Gästen. Als Therapiebadewannen dienen sie der Behandlung von Patienten, beispielsweise durch Unterwassermassage, oder sie dienen der Steigerung des Wohlbefindens, beispielsweise durch Sprudelbäder oder Lichtbestrahlung. Zu diesem Zweck weisen die Badewannen Einbauten unterschiedlicher Art auf, wie Massagedüsen, Umwälzsysteme, Pumpen und dergleichen, die einer Reinigung oft schwer zugänglich sind. Insbesondere wenn durch die Einbauten Kapillaren entstehen, setzen sich Keime leicht in den Badewannen fest und können auch durch aufwendige Desinfektionsmaßnahmen, wie Abwischen der Wannenoberfläche oder Spülen mit Desinfektionsmitteln, oft nicht vollständig wieder entfernt werden. Dieser Nachteil wiegt um so schwerer, als die Badegäste häufig wechseln und dadurch eine Vielzahl unterschiedlicher Keime in die Badewannen eingeschleppt werden. Desweiteren sind insbesondere bei Therapiebadewannen die Badegäste oft gesundheitlich geschwächt und daher besonders anfällig für Keime.

Es ist daher Aufgabe der Erfindung, eine Vorrichtung und ein Verfahren zur Aufbereitung des Badewassers einer für jede Anwendung mit frischem Badewasser neu zu befüllenden Badeeinrichtung bereitzustellen, die eine Verkeimung der Badeeinrichtung verhindern oder zumindest erschweren.

Die Aufgabe wird erfindungsgemäß durch die in Anspruch 1 bzw. Anspruch 8 angegebenen Merkmalskombinationen gelöst. Vorteilhafte Weiterbildungen der Erfindung sind Gegenstand der abhängigen Ansprüche.

Der Erfindung liegt der Gedanke zugrunde, das Badewasser für jede Anwendung bzw. für jeden Badegast aufs neue mit einem vorzugsweise desinfizierenden Wasseraufbereitungsmittel zu versehen. Dadurch wird zumindest für einige Zeit ein Depot von freiem, also ungebundenem und chemisch aktivem Wasseraufbereitungsmittel im Badewasser gebildet, das vom Badegast abgegebene Keime innerhalb kurzer Zeit abtötet. Indem das Wasseraufbereitungsmittel im gesamten Badewasser enthalten ist, wird die Gefahr einer Ansiedlung von Keimen in der Badeeinrichtung, die mit herkömmlichen Desinfektionsmaßnahmen schwer zu beseitigen ist, ausgeschlossen oder zumindest stark erschwert. Durch die Dosiereinrichtung kann das Wasseraufbereitungsmittel abhängig von der Füllmenge sowie abhängig von der Art der Badeeinrichtung und vom Badegast individuell genau dosiert werden. Dadurch wird eine zu geringe Dosierung, die eine Keimansiedlung in der Badeeinrichtung nicht zuverlässig verhindert, ebenso vermieden wie eine zu hohe Dosierung, die eine Geruchsbelästigung und/oder Hautreizungen beim Badegast verursachen kann.

Es ist möglich, mittels der Dosiereinrichtung das Wasseraufbereitungsmittel direkt in die Badeeinrichtung bzw. in das eingefüllte frische Badewasser einzuleiten. Es ist jedoch vorteilhaft, wenn die Dosiereinrichtung eine Aufbereitungsmittelleitung aufweist, die mit einer Zuführleitung zur Einleitung des frischen Badewassers in die Badeeinrichtung verbunden ist und durch die das Wasseraufbereitungsmittel in die Zuführleitung einleitbar ist. Dadurch wird zum einen auch eine Keimansiedlung in der Zuführleitung erschwert. Zum anderen wird das Wasseraufbereitungsmittel bereits im Badewasser gelöst, also in stark verdünnter Form in die Badeeinrichtung eingeleitet. Dadurch werden kurzzeitige lokale hohe Konzentrationen des Wasseraufbereitungsmittels im Badewasser vermieden, die bei Kontakt mit dem Badegast Hautirritationen hervorrufen könnten.

Die Dosiereinrichtung weist zweckmäßig eine Dosierpumpe zum Fördern des Aufbereitungsmittels von einem Vorratsbehälter zur Zuführleitung auf. Desweiteren kann die Dosiereinrichtung einen Wasserstandssensor zur Erkennung des Überschreitens eines vorgegebenen Wasserstands in der Badeeinrichtung sowie eine Steuereinheit zur Aktivierung der Dosierpumpe bei Überschreiten des vorgegebenen Wasserstands aufweisen. Das Wasseraufbereitungsmittel wird durch die Dosierpumpe nur dann in die Badeeinrichtung eingeleitet, wenn eine Mindestmenge an Wasser in der Badeeinrichtung vorhanden ist. Dadurch wird vermieden, dass bei einer Einleitung von Wasser zu Reinigungszwecken bzw. zum Spülen der Badeeinrichtung unnötigerweise Wasseraufbereitungsmittel dazugegeben wird. Alternativ hierzu kann die Dosiereinrichtung einen Volumenstromsensor in der Zuführleitung zur Messung der eingeleiteten Wassermenge sowie eine Regeleinheit zur Vorgabe der Dosis des Wasseraufbereitungsmittels in Abhängigkeit von der eingeleiteten Wassermenge und zur Aktivierung der Dosierpumpe aufweisen. Der Volumenstromsensor misst die an ihm vorbeifließende Wassermenge in der Zuführleitung und gibt das Meßsignal an die Regeleinheit weiter. In der Regeleinheit ist die Dosierung von Wasseraufbereitungsmittel pro Wassermenge einprogrammiert. Abhängig von der am Volumenstromsensor vorbeigeleiteten Wassermenge regelt die Regeleinheit die Beimischung des Wasseraufbereitungsmittels. Dadurch kann die Konzentration des Wasseraufbereitungsmittels im Badewasser sehr genau eingeregelt werden.

Eine weitere alternative Möglichkeit, die Konzentration des Wasseraufbereitungsmittels einzuregeln, besteht darin, dass die Dosiereinrichtung an der Mündung der Aufbereitungsmittelleitung in die Zuführleitung eine Injektordüse zur Erzeugung einer Sogwirkung in der Aufbereitungsmittelleitung bei strömendem Wasser aufweist. Durch das an der Injektordüse vorbeiströmende Wasser wird ein Sog erzeugt, durch den das Wasseraufbereitungsmittel vorzugsweise aus einem Vorratsbehälter in die Zuführleitung gesaugt und dem einströmenden Badewasser beigemischt wird. Diese Ausführungsform ist bei ausreichender Dosiergenauigkeit besonders einfach in der Ausführung, da keine Dosierpumpe benötigt wird.

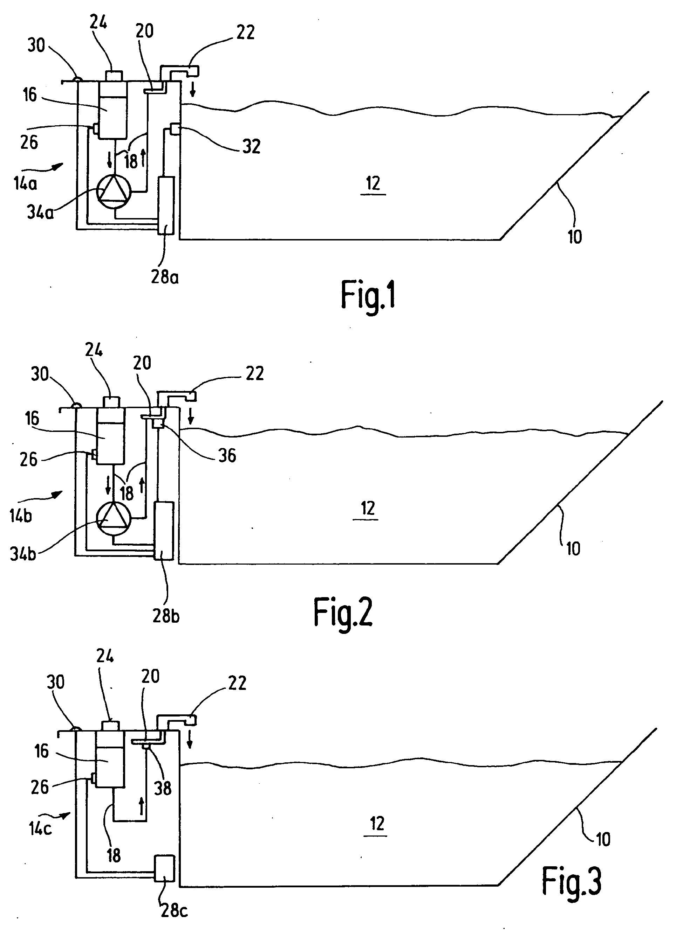

Im Folgenden wird die Erfindung durch die in der Zeichnung dargestellten Ausführungsbeispiele näher erläutert. Es zeigen
- Fig. 1 bis Fig. 3: Badeeinrichtungen mit einer Wasseraufbereitungsvorrichtung gemäß einem ersten, einem zweiten und einem dritten Ausführungsbeispiel.

In allen drei Ausführungsbeispielen (Figuren 1 bis 3) ist eine Therapiebadewanne 10 dargestellt, in der jeweils mittels Behandlungseinrichtungen im Wasser 12 befindliche Patienten behandelt werden können. Die Therapiebadewanne 10 wird bei jeder Anwendung, d. h. für jeden einzelnen Patienten, neu mit frischem Badewasser 12 befüllt und nach Ende der Behandlung vollständig entleert, wobei das gebrauchte Badewasser entsorgt wird. Um die in der Zeichnung nicht näher dargestellten Behandlungseinrichtungen vor Keimbefall zu schützen, ist jede Therapiebadewanne 10 mit einer Vorrichtung 14a, 14b, 14c zur Aufbereitung des Badewassers ausgestattet.

Den Wasseraufbereitungsvorrichtungen 14a, 14b, 14c gemäß allen drei Ausführungsbeispielen ist ein Vorratsbehälter 16 für ein chlorhaltiges Desinfektionsmittel gemein, der mittels einer Desinfektionsmittelleitung 18 mit einer Zuführleitung 20 für das frische Badewasser 12 verbunden ist. Über die Desinfektionsmittelleitung 18 wird das Desinfektionsmittel zur Wasseraufbereitung in die Zuführleitung 20 geleitet und mit dem frischen Badewasser 12 vermischt, das über einen Wanneneinlauf 22 in die Therapiebadewanne 10 geleitet wird. Das chlorhaltige Desinfektionsmittel bildet im Badewasser 12 für eine begrenzte Zeit ein Depot. Das bedeutet, dass ungebundenes Desinfektionsmittel im Wasser gelöst ist, das in das Wasser gelangende Keime binnen kurzer Zeit abtötet. In allen drei Ausführungsbeispielen ist der Vorratsbehälter 16 über einen Füllstutzen 24 befüllbar und weist einen Leersignalsensor 26 auf, der ein Signal abgibt, wenn der Pegel im Vorratsbehälter 16 unter einen Minimalwert absinkt. Der Leersignalsensor 26 ist mit einer Steuer- und/oder Regeleinheit 28a, 28b, 28c verbunden, die das Signal bei Absinken des Pegels im Vorratsbehälter 16 unter den Minimalwert empfängt und eine Leersignalanzeige 30 betätigt.

Gemäß dem ersten Ausführungsbeispiel (Fig. 1) ist am Beckenrand der Therapiebadewanne 10 ein Füllstandssensor 32 angeordnet. Der Füllstandssensor 32 registriert ein Ansteigen des Badewasserpegels über einen vorgegebenen Wert. In diesem Fall wird ein Signal des Füllstandssensors 32 an die Steuereinheit 28a gesendet, die eine Dosierpumpe 34a aktiviert. Die Dosierpumpe 34a befindet sich in der Desinfektionsmittelleitung 18 und pumpt eine vorgegebene Dosis des Desinfektionsmittels in die Zuführleitung 20 für das Badewasser 12, wo sie mit dem einströmenden Wasser vermischt wird.

Die Wasseraufbereitungsvorrichtung 14b gemäß dem zweiten Ausführungsbeispiel (Fig. 2) weist ebenfalls eine Dosierpumpe 34b für das Desinfektionsmittel auf. Anstelle des Füllstandssensors 32 ist hier jedoch an der Zuführleitung 20 für das Badewasser 12 ein Volumenstromsensor 36 angeordnet, der die pro Zeiteinheit vorbeiströmende Wassermenge misst. Der Messwert wird an die Regeleinheit 28b übermittelt, die die Dosierpumpe 34b so regelt, dass der Desinfektionsmittelstrom in der Desinfektionsmittelleitung 18 stets annähernd proportional zum Wasserstrom in der Zuführleitung 20 ist. Dadurch erhält man stets eine annähernd konstante Konzentration des Desinfektionsmittels im Badewasser 12 bereits in der Zuführleitung 20.

Dieses Prinzip ist im dritten Ausführungsbeispiel (Fig. 3) vereinfacht. An der Mündung der Desinfektionsmittelleitung 18 in die Zuführleitung 20 ist eine Injektordüse 38 angeordnet, die bei vorbeiströmendem Wasser eine Sogwirkung in der Desinfektionsmittelleitung 18 erzeugt. Durch diese Sogwirkung die annähernd proportional zum Volumenstrom des Wassers ist, wird ebenfalls eine zur Wassermenge annähernd proportionale Desinfektionsmittelmenge dem frischen Badewasser 12 beigemischt. Die Steuereinheit 28c dient hier lediglich der Ansteuerung der Leersignalanzeige 30.

### Zusammenfassend ist folgendes festzuhalten:

Die Erfindung betrifft eine Vorrichtung zur Aufbereitung, vorzugsweise zur Desinfektion, des Badewassers 12 einer für jede Anwendung mit frischem Badewasser neu zu befüllenden Badeeinrichtung 10. Erfindungsgemäß ist eine Dosiereinrichtung für die Einleitung einer vorgegebenen Dosis eines vorzugsweise desinfizierenden Wasseraufbereitungsmittels in das frische Badewasser 12 vorgesehen.

## Patentansprüche

1. Vorrichtung zur Aufbereitung, vorzugsweise zur Desinfektion, des Badewassers (12) einer für jede Anwendung mit frischem Badewasser neu zu befüllenden Badeeinrichtung (10), **gekennzeichnet durch** eine Dosiereinrichtung für die Einleitung einer vorgegebenen Dosis eines vorzugsweise desinfizierenden Wasseraufbereitungsmittels in das frische Badewasser (12).

2. Vorrichtung nach Anspruch 1, **dadurch gekennzeichnet, dass** die Dosiereinrichtung eine Aufbereitungsmittelleitung (18) aufweist, die mit einer Zuführleitung (20) zur Einleitung des frischen Badewassers (12) in die Badeeinrichtung (10) verbunden ist und durch die das Wasseraufbereitungsmittel in die Zuführleitung (20) einleitbar ist.

3. Vorrichtung nach Anspruch 2, **dadurch gekennzeichnet, dass** die Dosiereinrichtung eine Dosierpumpe (34a; 34b) zum Fördern des Wasseraufbereitungsmittels von einem Vorratsbehälter (16) zur Zuführleitung (20) aufweist.

4. Vorrichtung nach Anspruch 3, **dadurch gekennzeichnet, dass** die Dosiereinrichtung einen Wasserstandssensor (32) zur Erkennung des Überschreitens eines vorgegebenen Wasserstands in der Badeeinrichtung (10) sowie eine Steuereinheit (28a) zur Aktivierung der Dosierpumpe (34a) bei Überschreiten des vorgegebenen Wasserstands aufweist.

5. Vorrichtung nach Anspruch 3, **dadurch gekennzeichnet, dass** die Dosiereinrichtung in der Zuführleitung (20) einen Volumenstromsensor (36) zur Messung der eingeleiteten Wassermenge sowie eine Regeleinheit (28b) zur Vorgabe der Dosis des Wasseraufbereitungsmittels in Abhängigkeit von der eingeleiteten Wassermenge und zur Aktivierung der Dosierpumpe (34b) aufweist.

6. Vorrichtung nach Anspruch 2, **dadurch gekennzeichnet, dass** die Dosiereinrichtung an der Mündung der Aufbereitungsmittelleitung (18) in die Zuführleitung (20) eine Injektordüse (38) zur Erzeugung einer Sogwirkung in der Aufbereitungsmittelleitung (18) bei strömendem Wasser aufweist.

7. Badeeinrichtung, insbesondere Therapiebadewanne, **gekennzeichnet durch** eine Vorrichtung (14a; 14b; 14c) zur Aufbereitung des Badewassers (12) nach einem der vorangehenden Ansprüche.

8. Verfahren zur Aufbereitung, vorzugsweise zur Desinfektion, des Badewassers (12) einer Badeeinrichtung (10), wobei die Badeeinrichtung (10) für jede Anwendung vollständig neu mit frischem Badewasser (12) befüllt wird, **dadurch gekennzeichnet, dass** mittels einer Dosiereinrichtung eine vorgegebene Dosis eines Wasseraufbereitungsmittels in das frische Badewasser (12) eingeleitet wird.

9. Verfahren nach Anspruch 8, **dadurch gekennzeichnet, dass** mittels eines Wasserstandssensors (32) das Überschreiten eines vorgegebenen Wasserstands in der Badeeinrichtung (10) gemessen wird, und dass beim Überschreiten des vorgegebenen Wasserstands mittels einer Steuereinheit (28a) eine Dosierpumpe (34a) zum Einleiten des Wasseraufbereitungsmittels in das Badewasser (12) aktiviert wird.

10. Verfahren nach Anspruch 8, **dadurch gekennzeichnet, dass** mittels eines Volumenstromsensors (36) der Volumenstrom der eingeleiteten Wassermenge gemessen wird, dass eine den Volumenstrom charakterisierende Meßgröße an eine Regeleinheit (28b) übermittelt wird, und dass mittels einer durch die Regeleinheit (28b) gesteuerten Dosierpumpe (34b) ein zum Volumenstrom proportionaler Aufbereitungsmittelstrom dem Wasser beigemischt wird.

11. Verfahren nach Anspruch 8, **dadurch gekennzeichnet, dass** durch das in einer Zuführleitung (20) beim Einleiten strömende frische Badewasser (12) an einer Injektordüse (38) für das Wasseraufbereitungsmittel ein Sog erzeugt wird, durch den das Wasseraufbereitungsmittel aus einem Vorratsbehälter (16) dem Wasser (12) beigemischt wird.
